(19) Europäisches Patentamt / European Patent Office / Office européen des brevets

(11) **EP 3 386 638 B1**

(12) **EUROPÄISCHE PATENTSCHRIFT**

(45) Veröffentlichungstag und Bekanntmachung des Hinweises auf die Patenterteilung:
**13.03.2019  Patentblatt 2019/11**

(21) Anmeldenummer: **16791403.5**

(22) Anmeldetag: **07.11.2016**

(51) Int Cl.:
**B02C 19/06** (2006.01)     **C01B 33/021** (2006.01)

(86) Internationale Anmeldenummer:
**PCT/EP2016/076825**

(87) Internationale Veröffentlichungsnummer:
**WO 2018/082789 (11.05.2018 Gazette 2018/19)**

(54) **VERFAHREN ZUM MAHLEN VON SILIZIUM ENTHALTENDEN FESTSTOFFEN**

METHOD FOR GRINDING SOLIDS CONTAINING SILICONE

PROCÉDÉ DE BROYAGE DE MATIERÈS SOLIDES CONTENANT SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.10.2018  Patentblatt 2018/42**

(73) Patentinhaber: **Wacker Chemie AG**
**81737 München (DE)**

(72) Erfinder:
• **HANELT, Eckhard**
**82269 Geltendorf (DE)**
• **FRICKE, Michael**
**84489 Burghausen (DE)**

(74) Vertreter: **Ege, Markus et al**
**Wacker Chemie AG**
**Hanns-Seidel-Platz 4**
**81737 München (DE)**

(56) Entgegenhaltungen:
**EP-A1- 1 754 539     DE-A1-102014 211 037**

Beschreibung

**Beschreibung**

Die Erfindung betrifft Verfahren zum Mahlen von Silizium enthaltenden Feststoffen mittels einer Strahlmühle.

In vielen Anwendungen besteht Bedarf an Silizium-Partikeln mit Partikeldurchmessern im Mikrometerbereich, wie beispielsweise beim Einsatz von Silizium-Partikeln als Aktivmaterial in negativen Elektroden von Lithium-Ionenbatterien. Ein Weg zur Herstellung solcher Partikel führt über die Zerkleinerung größerer Silizium-Partikel, beispielsweise durch Mahlen. So beschreibt die EP1754539 zur Herstellung von Silizium-Partikeln mit Durchmessern von 50 bis 1000 $\mu$m das Zerkleinern von Siliziumgranulat mittels einer Wirbelschicht-Strahlmühle, wobei als Mahlgasstrom Stickstoff, Argon oder gereinigte Luft Einsatz finden können. Für Lithium-Ionenbatterien werden aber Silizium-Partikel mit mittleren Partikelgrößen von im Allgemeinen kleiner als 3 $\mu$m benötigt. Zur Herstellung kleinteiliger Siliziumpulver mit durchschnittlichen Partikelgrößen von beispielsweise 0,02 bis 10 $\mu$m kommen häufig Nassmahlverfahren zum Einsatz, wie aus der EP3027690 bekannt. In Nassmahlverfahren wird das Mahlgut in einer Mahlflüssigkeit suspendiert. Mahlflüssigkeiten, wie Alkohole, können mit den Siliziumoberflächen unter Freisetzung von Wasserstoff reagieren. Nach der Nassmahlung ist zur Herstellung trockener Pulver eine Trocknung und damit ein zusätzlicher Verfahrensschritt erforderlich. Nachteiligerweise kann es beim Trocknen der Mahlsuspensionen zum Agglomerieren von Silizium-Partikeln kommen. Anschließendes Deagglomerieren macht nochmals einen weiteren Verfahrensschritt erforderlich, insbesondere im Falle des Einsatzes der Silizium-Partikel in Elektrodentinten für Lithiumionen-Batterien, bei dem auf homogene Partikelgrößenverteilungen Wert gelegt wird.

Die Aufgabe für die vorliegende Erfindung bestand nun darin, Verfahren zum Mahlen von Silizium enthaltenden Feststoffen bereitzustellen, mit denen die vorgenannten Nachteile möglichst vermieden werden können und auch Silizium-Partikel mit kleinen durchschnittlichen Partikelgrößen zugänglich werden.

Diese Aufgabe wurde mit dem Verfahren gemäß Anspruch 1 gelöst.

Strahlmühlen mit Wasserdampf als Mahlfluid sind an sich beispielsweise aus der DE19824062 oder der US7866582 bekannt. Als Mahlgut ist darin Siliziumdioxid, aber kein Silizium genannt. Für das Mahlen von Silizium enthaltenden Feststoffen in Strahlmühlen ist Wasserdampf als Mahlfluid bisher nicht in Betracht gezogen worden. Denn Silizium reagiert mit Wasser in einer exothermen Reaktion unter Oxidation des Siliziums und Bildung von Wasserstoff. Weil beim Mahlen von Silizium enthaltenden Feststoffen ständig neue, aktive Siliziumoberflächen mit offenen chemischen Bindungen entstehen, die gegenüber Wasser hochreaktiv sind, war zu befürchten, dass die Oxidation beim Mahlen der Silizium enthaltenden Feststoffe in Gegenwart von Wasserdampf einen so heftigen Verlauf nimmt und so weit voranschreitet, dass auf diese Weise hergestellte Partikel vollständig oder zumindest in erheblichem Umfang durchoxidiert sind und damit in entsprechenden Anwendungen für Silizium-Partikel nicht mehr adäquat verwertbar sind. Zudem ist eine entsprechende Bildung von Wasserstoff während des Mahlens aus sicherheitstechnischen Gründen hochproblematisch. Überraschenderweise treten diese Probleme beim erfindungsgemäßen Verfahren nicht oder zumindest nicht in hinderlicher Weise auf.

Herkömmliche Verfahren zum Mahlen von Silizium enthaltenden Feststoffen, wie in EP1754539 oder EP3027690, erfolgen dagegen unter wesentlich milderen Bedingungen, beispielsweise unter Schutzgasatmosphäre, wie Stickstoff oder Argon, oder an Luft, oder in weniger reaktiven Lösungsmitteln, wie Alkoholen. Unter solchen Mahlbedingungen oder während des anschließenden Lagerns der gemahlenen Silizium-Partikel unter Normalbedingungen bilden sich bekanntermaßen dünne Oxidschichten als passivierende Schutzschichten auf den Silizium-Partikeln. Überraschenderweise weisen die erfindungsgemäß hergestellten Silizium-Partikel gleiche, nahezu gleiche oder äquivalente Eigenschaften auf wie Silizium-Partikel, die nach den eben genannten herkömmlichen Verfahren hergestellt und anschließend an Luft unter Normalbedingungen gelagert wurden. Dies betrifft vorzugsweise auch den Sauerstoffgehalt von Silizium-Partikeln vergleichbarer Größe.

Vorteilhafterweise können nach dem erfindungsgemäßen Verfahren auch Silizium-Partikel mit kleinteiligen durchschnittlichen Partikelgrößen in effizienter Weise zugänglich werden, wie es bisher nur nach Nassmahlverfahren möglich war, wobei die Nachteile von Nassmahlverfahren, wie zusätzliche Trocknungs- oder Deagglomerations-Schritte, entfallen können, so dass das erfindungsgemäße Verfahren demgegenüber durch eine besondere Effizienz ausgezeichnet ist.

Gegenstand der Erfindung sind Verfahren zur Herstellung von Silizium-Partikeln durch Mahlen von Silizium enthaltenden Feststoffen in einer Strahlmühle mit einem Mahlfluid enthaltend ≥20 Vol. % Wasserdampf, bezogen auf das Gesamtvolumen des Mahlfluids.

Es können die gängigen Strahlmühlen Einsatz finden. Strahlmühlen umfassen allgemein eine Mahlkammer mit Einlässen für das Mahlfluid und gegebenenfalls eine oder mehrere weitere Vorrichtungen, wie Sichter.

Bevorzugte Strahlmühlen sind Gegenstrahlmühlen oder Spiralstrahlmühlen. Besonders bevorzugt sind Dichtbettstrahlmühlen, Spiralstrahlmühlen und insbesondere Fließbettgegenstrahlmühlen.

Fließbettgegenstrahlmühlen enthalten, vorzugsweise im unteren Drittel der Mahlkammer, zwei oder mehr Einlässe für das Mahlfluid, bevorzugt in Form von Düsen, welche sich bevorzugt in einer horizontalen Ebene befinden. Die Mahlstrahleinlässe sind besonders bevorzugt so am Umfang der vorzugsweise runden Mahlkammer angeordnet, dass sich die Mahlstrahlen alle an einem Punkt im Inneren der Mahlkammer treffen. Insbesondere bevorzugt sind die Mahlstrahleinlässe gleichmäßig über den Umfang der Mahlkammer verteilt. Im Falle von drei Mahlstrahleinlässen beträgt der Abstand vorzugsweise jeweils 120°.

Die Strahlmühlen können auch mit einem oder mehreren Sichtern ausgestattet sein. Mit einem Sichter kann das Oberkorn begrenzt werden. Sichter können den Strahlmühlen als separate Einheit nachgeschaltet sein. Bevorzugt sind Sichter in die Strahlmühlen integriert, im Allgemeinen der Mahlkammer räumlich nachgelagert. Gemahlene Silizium-Partikel können mit dem Gasstrom des Mahlfluids aus der Mahlkammer herausgeführt und in den Sichter geleitet werden. Im Sichter werden die Silizium-Partikel generell nach ihrer Partikelgröße separiert. Silizium-Partikel mit gewünschten Partikelgrößen können über den Sichter und aus der Strahlmühle herausgeführt und isoliert werden. Zu grobteilige Silizium-Partikel können in die Mahlkammer zurückgeführt und einem erneuten Mahlen unterworfen werden.

Besonders bevorzugt sind dynamische Sichter, wie dynamische Windsichter, insbesondere dynamische Schaufelradsichter. Ein dynamischer Windsichter enthält beispielsweise ein Sichterrad, eine Sichterradwelle und ein Sichtergehäuse, wobei zwischen dem Sichterrad und dem Sichtergehäuse ein Sichterspalt und zwischen der Sichterradwelle und dem Sichtergehäuse eine Wellendurchführung gebildet ist. Vorzugsweise erfolgt eine Spaltspülung von Sichterspalt und/oder Wellendurchführung mit einem Gas, insbesondere mit einem inerten Gas, wie Stickstoff oder Argon, oder mit Wasserdampf, insbesondere überhitztem Wasserdampf. Die Temperatur des Gases ist vorzugsweise so hoch, dass der Wasserdampf in der Strahlmühle nicht kondensiert.

Bevorzugt sind Fließbettgegenstrahlmühlen mit integriertem Sichter.

Die Strahlmühlen können in herkömmlicher Weise aus hierfür gängigen Materialien aufgebaut sein. Die Strahlmühlen oder Teile der Strahlmühlen, insbesondere der Mahlraum, sind vorzugsweise aus Silizium oder verschleißfester Keramik, wie Zirkonoxid, Siliziumnitrid oder Siliziumkarbid, hergestellt oder damit ausgekleidet. Das Sichterrad ist die Komponente von Strahlmühlen, die dem stärksten Verschleiß ausgesetzt ist. Das Sichterrad ist bevorzugt mit Diamant beschichtet oder aus einer Keramik hergestellt, insbesondere aus einer Silizium enthaltenden Keramik, wie Siliziumnitrid oder Siliziumkarbid. Solche Keramiken sind besonders verschleißfest. Diese Maßnahmen sind geeignet, um eine Kontamination des Mahlguts mit Fremdstoffen in Folge des Kontakts mit den Wänden der Strahlmühle zu vermeiden oder zumindest zu reduzieren.

Wasserdampf bezeichnet allgemein Wasser im gasförmigen Aggregatzustand. Wasserdampf enthält zu wesentlichem Anteil Wasser. Wasserdampf ist beispielsweise erhältlich, indem Wasser verdampft oder verdunstet wird.

Das erfindungsgemäße Mahlfluid enthält Wasserdampf zu ≥ 20 Vol.%, besonders bevorzugt ≥ 50 Vol.%, am meisten bevorzugt ≥ 90 Vol.%. Das Mahlfluid enthält kondensiertes Wasser beziehungsweise auskondensierte Wassertröpfchen zu vorzugsweise < 5 Vol.%, besonders bevorzugt < 1 Vol.% und am meisten bevorzugt < 0,1 Vol.%. Sauerstoff ist im Mahlfluid zu vorzugsweise ≤ 10 Vol.%, besonders bevorzugt ≤ 5 Vol.% und am meisten bevorzugt ≤ 1 Vol.% enthalten. Stickstoff, Edelgase oder sonstige Inertgase sind im Mahlfluid zu vorzugsweise ≤ 80 Vol.%, besonders bevorzugt ≤ 50 Vol.% und am meisten bevorzugt ≤ 10 Vol.% enthalten. Organische Lösungsmittel sind im Mahlfluid zu vorzugsweise ≤ 20 Vol.%, besonders bevorzugt ≤ 5 Vol.% und am meisten bevorzugt überhaupt nicht enthalten. Das Mahlfluid kann gegebenenfalls noch sonstige Verunreinigungen enthalten, wie beispielsweise basische Verunreinigungen, wie Ammoniak, oder anorganische Salze, wie (Erd)Alkali-Halogenide, -Sulfate oder -Nitrate. Sonstige Verunreinigungen sind im Mahlfluid zu vorzugsweise ≤ 10 Vol.%, besonders bevorzugt ≤ 5 Vol.% und am meisten bevorzugt ≤ 1 Vol.% enthalten. Die Angaben in Vol.% beziehen sich jeweils auf das Gesamtvolumen des Mahlfluids. Die vorgenannten Komponenten wie auch die Angaben in Vol.% für unterschiedliche Komponenten sind jeweils sowohl unabhängig voneinander als auch in Kombination offenbart.

Zur Klarstellung sei erwähnt, dass ein etwaiger Wassergehalt von Luft unter tropischen Bedingungen bei 100% relativer Luftfeuchtigkeit bekanntermaßen 3 Vol.% betragen kann. Luft enthält Wasser somit nur in Spuren. Luft ist kein erfindungsgemäßes Mahlfluid.

Die Temperatur des Mahlfluids enthaltend Wasserdampf liegt beim jeweiligen Druck vorzugsweise ≥ 2°C und besonders bevorzugt ≥ 5°C über dem Taupunkt von Wasser. Der Taupunkt bezeichnet die Temperatur, bei der sich das Kondensieren und das Verdunsten von Wasser im Gleichgewicht befinden. Oder anders ausgedrückt, der Taupunkt ist diejenige Temperatur, die bei konstantem Druck unterschritten werden muss, damit Wasser aus Wasserdampf auskondensiert. Am Taupunkt beträgt die relative Luftfeuchtigkeit 100%. Der Taupunkt wird auf etablierte Weise mit einem Taupunktspiegelhygrometer bestimmt.

Bevorzugt ist überhitzter Wasserdampf. In überhitztem Wasserdampf liegt Wasser generell im gasförmigen Aggregatzustand vor. Im überhitzten Wasserdampf sind die einzelnen Wassermoleküle im Allgemeinen isoliert, das heißt nicht kondensiert. Wasser im gasförmigen Aggregatzustand enthält im Allgemeinen keine auskondensierten Wassertröpfchen. Sichtbare auskondensierte Wassertröpfchen haben beispielsweise mittlere Durchmesser von größer als 400 nm. Solange sich überhitzter Wasserdampf in seinem überhitzten Zustand befindet, findet keine Kondensation, das heißt keine Bildung von Wassertröpfchen statt, auch bei Kontakt mit der Umgebungsluft oder anderen Gasen.

Überhitzter Wasserdampf ist beispielsweise erhältlich durch Erhitzen von Wasser zum Siedepunkt, anschließende Zufuhr der Verdampfungswärme unter Bildung von Sattdampf und schließlich Zufuhr weiterer Wärme.

Sattdampf stellt bekanntermaßen ein Gleichgewicht dar, bei welchem genau so viel Wasser verdampft wie es kondensiert. Verdampfungswärme ist allgemein die Wärmemenge, die benötigt wird, um die auskondensierten Wassertröpfchen im Sattdampf in den gasförmigen Aggregatzustand, das heißt in gasförmiges Wasser zu überführen.

Überhitzter Wasserdampf ist farblos und durchsichtig, wie allgemein bekannt, im Gegensatz zu Nassdampf, der Wassermoleküle in Form kleiner Tröpfchen enthält, die sichtbares Licht streuen und so einen Nebel bilden, der umgangssprachlich unpräzise pauschal meist als Wasserdampf bezeichnet wird.

Im Phasendiagramm von Wasser bildet die Sattdampfkurve die Trennlinie von Nassdampf zu überhitztem Wasserdampf.

Bei gegebenem Druck ist die Temperatur des in die Strahlmühle einströmenden Mahlfluids vorzugsweise größer als die Temperatur, die der Sattdampfkurve von Wasser bei diesem Druck entspricht. Besonders bevorzugt liegt die Temperatur des Mahlfluids mindestens 2°C über der Temperatur der Sattdampfkurve und ganz besonders bevorzugt mindesten 5°C über der entsprechenden Temperatur der Sattdampfkurve.

Das in die Mahlkammer eingebrachte Mahlfluid weist eine Schallgeschwindigkeit auf von vorzugsweise > 343 m/s, besonders bevorzugt $\geq$ 350 m/s und am meisten bevorzugt $\geq$ 450 m/s. Die Schallgeschwindigkeit des Mahlfluids ist im Allgemeinen höher als die Schallgeschwindigkeit von Luft (343 m/s). Solche Schallgeschwindigkeiten sind insbesondere vorteilhaft zur Erzielung des bevorzugten Mahlgrades beziehungsweise zur Herstellung von Silizium-Partikeln mit den unten genannten Partikelgrößenverteilungen.

Das Mahlfluid hat einen Druck von vorzugsweise 5 bis 220 bar, besonders bevorzugt von 10 bis 150 bar und am meisten bevorzugt 20 bis 70 bar. Das Mahlfluid weist eine Temperatur auf von vorzugsweise 160 bis 800°C, besonders bevorzugt 180 bis 600°C und am meisten bevorzugt 200 bis 400°C.

Die obigen Angaben betreffend Wasserdampf oder das Mahlfluid beziehen sich vorzugsweise auf den Wasserdampf beziehungsweise das Mahlfluid, wie er beziehungsweise es in die Strahlmühle, insbesondere durch die Düse in die Mahlkammer, eingebracht wird.

Die Bestimmung der Partikelgrößenverteilung der erfindungsgemäß hergestellten Silizium-Partikel sowie der Silizium enthaltenden Feststoffe (Ausgangsmaterial) erfolgt erfindungsgemäß nach ISO 13320 mittels statischer Laserstreuung mit dem Messgerät Horiba LA 950. Die Proben werden nass in Isopropanol gemessen. Bei der Vorbereitung der Proben wird besondere Sorgfalt auf die Dispergierung der Partikel in der Messlösung aufgewendet, um statt Einzelpartikeln nicht die Größe von Agglomeraten zu messen. Dazu wurden stark verdünnte Suspensionen (0,2 bis 2 Gew.% Feststoffgehalt) der Silizium-Partikel in Isopropanol hergestellt, die vor der Messung 30 min mit Ultraschall behandelt wurden (beispielsweise in einem Hielscher Ultraschall-Laborgerät Modell UIS250v mit Sonotrode LS24d5, 120 W Leistung, 50% getaktet).

Die Partikelgrößenverteilungen werden durch die Werte $d_{10}$, $d_{50}$ oder $d_{90}$ charakterisiert, die für die 10%-, 50%- beziehungsweise 90%-Perzentilwerte der volumengewichteten Durchmessergrößenverteilungen der Partikel stehen.

Die Silizium enthaltenden Feststoffe, also das Ausgangsmaterial, haben eine volumengewichtete Partikelgrößenverteilung mit einem $d_{90}$-Wert von vorzugsweise $\leq$ 4 mm, besonders bevorzugt $d_{90}$ $\leq$ 2 mm und ganz besonders bevorzugt $d_{90}$ $\leq$ 500 $\mu$m.

Der Median der volumengewichteten Durchmessergrößenverteilung $d_{50}$ der erfindungsgemäß hergestellten Silizium-Partikel liegt im Bereich von vorzugsweise 0,3 $\mu$m bis 100 $\mu$m, besonders bevorzugt 0,5 $\mu$m bis 10 $\mu$m und am meisten bevorzugt 0,5 $\mu$m bis 5 $\mu$m.

Der $d_{10}$-Wert der erfindungsgemäß hergestellten Silizium-Partikel liegt im Bereich von vorzugsweise 0,1 $\mu$m bis 50 $\mu$m, besonders bevorzugt 0,2 $\mu$m bis 25 $\mu$m und am meisten bevorzugt 0,3 $\mu$m bis 2,5 $\mu$m.

Der $d_{90}$-Wert der erfindungsgemäß hergestellten Silizium-Partikel liegt im Bereich von vorzugsweise 0,6 $\mu$m bis 300 $\mu$m, besonders bevorzugt 1 $\mu$m bis 30 $\mu$m und am meisten bevorzugt 1,5 $\mu$m bis 15 $\mu$m.

Die relative Breite der volumengewichteten Größenverteilung ($d_{90}$ - $d_{10}$) / $d_{50}$ der erfindungsgemäß hergestellten Silizium-Partikel ist vorzugsweise $\leq$ 3 und besonders bevorzugt $\leq$ 2.

Die erfindungsgemäß hergestellten Silizium-Partikel weisen Bruchflächen auf, die scharfkantig sein können. Sie sind typischerweise splitterförmig.

Eine Möglichkeit zur Charakterisierung der Partikelform ist die Sphärizität. Nach der Definition von Wadell ist die Sphärizität $\psi$ das Verhältnis aus der Oberfläche einer Kugel gleichen Volumens zur tatsächlichen Oberfläche eines Körpers. Im Falle einer Kugel hat $\psi$ den Wert 1. Nach dieser Definition haben die erfindungsgemäß hergestellten Silizium-Partikel eine Sphärizität von vorzugsweise 0,3 < $\psi$ < 0,9 und besonders bevorzugt 0,5 < $\psi$ < 0,9.

Nach einer alternativen Definition ist die Sphärizität S das Verhältnis aus dem zu einem Kreis äquivalenten Durchmesser der Projektionsfläche A eines Partikels auf eine Ebene zum entsprechenden Durchmesser aus dem Umfang U dieser Projektion: $S = 2\sqrt{\pi A}/U$.

Im Falle eines idealen Kreises hat S den Wert 1. Für die erfindungsgemäß hergestellten Silizium-Partikel liegt die Sphärizität S im Bereich von vorzugsweise 0,5 bis 0,9. Die Messung der Sphärizität S erfolgt durch grafische Auswertung von Aufnahmen einzelner Partikel mit einem optischen Mikroskop oder bei Partikeln < 10 $\mu$m mit einem Rasterelektronenmikroskop.

Die internationale Norm der "Federation Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben, sind zum Beispiel Kornform und Korngrößenverteilung (FEM 2.581 / FEM 2.582: General characteristics of bulk products with regard to their classification and their symbolization). Nach DIN ISO 3435 können Schüttgüter in Abhängigkeit der Beschaffenheit der Kornkanten in 6 unterschiedliche Kornformen untergliedert werden:

I: scharfe Kanten mit ungefähr gleichen Ausmaßen in den drei Dimensionen (Beispiel: Würfel);
II: scharfe Kanten, deren eine deutlich länger ist als die anderen beiden (Beispiel: Prisma, Klinge);
III: scharfe Kanten, deren eine deutlich kleiner ist als die beiden anderen (Beispiel: Platte, Schuppen);
IV: runde Kanten mit ungefähr gleichen Ausmaßen in den drei Dimensionen (Beispiel: Kugel);
V: runde Kanten, in einer Richtung deutlich größer als in den anderen beiden (Beispiel: Zylinder, Stange);
VI: faserig, fadenförmig, lockenförmig, verschlungen.

Gemäß dieser Klassifizierung von Schüttgütern handelt es sich bei den erfindungsgemäß hergestellten Silizium-Partikeln vorzugweise um Partikel der Kornformen I, II oder III.

Die folgenden Angaben zur stofflichen Zusammensetzung beziehen sich, soweit nichts anderes angegeben ist, sowohl auf die erfindungsgemäß hergestellten Silizium-Partikel als auch auf die als Ausgangsmaterial eingesetzten Silizium enthaltenden Feststoffe.

Silizium im Sinne dieser Erfindung ist im Allgemeinen ein Feststoff, der Phasen von elementarem Silizium enthält.

Bevorzugt ist elementares Silizium. Denn elementares Silizium ist für Verfahren zur Herstellung von Silizium-Partikel enthaltenden Anodenmaterialien für Lithium-Ionen-Batterien besonders vorteilhaft. Solches Silizium besitzt die höchste Speicherkapazität für Lithiumionen.

Unter elementarem Silizium ist hochreines Polysilizium, mit geringem Anteil an Fremdatomen (wie beispielsweise B, P, As), gezielt dotiertes Silizium, aber auch metallurgisches Silizium, welches eine spezifizierte Menge elementarer Verunreinigung (wie beispielsweise Fe, Al, Ca) aufweisen kann, zu verstehen.

Das Silizium kann auch Siliziumoxid oder eine binäre, ternäre oder multinäre Silizium/Metall-Legierung (mit beispielsweise Sn, Ca, Co, Ni, Cu, Cr, Ti, Al, Fe) enthalten.

Die metallischen beziehungsweise die elementaren Verunreinigungen des Siliziums betragen vorzugs-weise $\leq$ 2 Gew.%, besonders bevorzugt $\leq$ 1 Gew.% und ganz besonders bevorzugt $\leq$ 0,5 Gew.%.

Falls das Silizium Siliziumoxid enthält, dann liegt die Stöchiometrie des Oxids SiOx bevorzugt im Bereich 0 < x < 1,3. Falls das Silizium ein Siliziumoxid mit höherer Stöchiometrie enthält, dann ist dessen Schichtdicke auf der Oberfläche bevorzugt kleiner als 10 nm und besonders bevorzugt kleiner als 5 nm.

Die erfindungsgemäß hergestellten Silizium-Partikel haben, bezogen auf 1 $m^2$ Partikeloberfläche, einen Sauerstoffgehalt von vorzugsweise $\leq$ 10 mg und besonders bevorzugt $\leq$ 6 mg (Bestimmungsmethode: Der Sauerstoffgehalt pro Partikeloberfläche in $mg/m^2$ ist der Quotient aus dem spezifischen Sauerstoffgehalt pro Masse Silizium, die mit einem Sauerstoffanalysator Leco TCH 600 gemessen wird, und dem aus der gemessenen Partikelgrößenverteilung unter der der Annahme kugelförmiger Partikel berechneten Partikeloberfläche in $m^2/g$. Diese Partikeloberfläche wird bei der Messung mit einem Horiba LA950 direkt erhalten).

Im erfindungsgemäßen Verfahren können jedoch auch Silizium enthaltende Feststoffe anderer Zusammensetzung als Ausgangsmaterial eingesetzt werden, beispielsweise Silizium mit einem höheren Anteil an Fremdatomen.

Zur Durchführung des erfindungsgemäßen Verfahrens werden die Silizium enthaltenden Feststoffe allgemein in die Mahlkammer der Strahlmühle eingebracht. Soweit nicht anders angegeben, kann das Mahlen mit der Strahlmühle auf herkömmliche Weise betrieben werden.

Das Mahlfluid enthaltend Wasserdampf wird der Mahlkammer im Allgemeinen durch ein oder mehrere Mahlstrahleinlässe, bevorzugt in Form von Düsen, zugeführt. In der Mahlkammer sind im Allgemeinen ein oder mehrere Mahlfluid-Gasströme (Mahlstrahlen) vorhanden. Beim Eintritt in die Mahlkammer expandiert das Mahlfluid üblicherweise.

Die zu mahlenden, Silizium enthaltenden Feststoffe werden im Allgemeinen in der Mahlkammer von Mahlstrahlen mitgerissen und üblicherweise auf hohe Geschwindigkeiten beschleunigt. Dies führt letztlich zum Zerkleinern beziehungsweise Mahlen von Silizium. Das Mahlen der Feststoffe erfolgt im Allgemeinen, indem unterschiedliche Feststoff-Partikel aufeinanderprallen, oder auch indem Feststoff-Partikel auf der Wand der Mahlkammer aufschlagen. Das Mahlen oder Zerkleinern ist also hauptsächlich ein Ergebnis von Prallbeanspruchung. Bewegliche mechanische Werkzeuge, wie Rotoren oder Mahlkugeln, finden in der Mahlkammer oder in der Strahlmühle im Allgemeinen keinen Einsatz.

Die Partikeldurchmesser der Mahlprodukte können bekanntermaßen über die Stoßgeschwindigkeit der Partikel beeinflusst werden. Der Partikeldurchmesser der Mahlprodukte ist bekanntermaßen proportional zur Wurzel des Kehrwertes der Stoßgeschwindigkeit der Partikel. Die Stoßgeschwindigkeit kann durch die Strahlgeschwindigkeit der Mahlstrahlen vorgegeben werden.

Mit Wasserdampf als Mahlfluid kann das Problem auftreten, insbesondere während des Anfahrens oder des Herunterfahrens der Strahlmühle, dass Wasserdampf auskondensiert. Die Strahlmühle wird vorzugsweise so ausgelegt und/oder betrieben, dass eine Kondensation von Wasserdampf in der Strahlmühle unterbleibt. Dem Anfahren der Strahlmühle wird vorzugsweise eine Aufheizphase vorangeschaltet. In der Aufheizphase wird die Mahlkammer, insbesondere der Mahlraum, auf eine Temperatur oberhalb des Tau-Punktes des Wasserdampfes erwärmt. Das Erwärmen erfolgt vorzugsweise, indem heißes Gas durch die Mahlkammer geleitet wird. Das heiße Gas ist vorzugsweise kein Wasserdampf, besonders bevorzugt Luft und insbesondere ein Inertgas, wie Stickstoff oder Argon. Am Ausgang der Mahlkammer ist die Temperatur des Gases vorzugsweise höher als der Taupunkt des Wasserdampfes. Beim Herunterfahren der Strahlmühle nach Abschluss des Mahlvorgangs oder zum Abkühlen der Strahlmühle kann beispielsweise getrocknetes Gas, das eine niedrigere Temperatur als der eingeführte Wasserdampf hat, in die Mahlkammer eingebracht werden. Getrocknetes Gas ist vorzugsweise kein Wasserdampf, besonders bevorzugt Luft und insbesondere ein Inertgas, wie Stickstoff oder Argon. Mit solchen Maßnahmen kann eine Kondensation von Wasserdampf unterbunden werden. Zudem kann auf diese Weise das Anfahren oder das Herunterfahren der Strahlmühle zeitlich verkürzt werden.

Das erfindungsgemäße Verfahren ist auf Grund des erfindungsgemäßen Einsatzes von Wasserdampf vorteilhafterweise ein sogenanntes Trockenmahlverfahren, das heißt, es kommt ohne Lösungsmittel aus beziehungsweise muss nicht in Dispersion betrieben werden. Deswegen können nach dem erfindungsgemäßen Mahlverfahren Silizium-Partikel direkt in Form von Pulvern erhalten werden, ohne dass zusätzliche Verfahrensschritte für die Trocknung oder Deagglomeration der Silizium-Partikel notwendig werden. Zudem können Silizium-Partikel mit sehr kleinen mittleren Partikeldurchmessern erhalten werden.

Eine Kontamination des Mahlguts mit Fremdstoffen kann vorteilhafterweise ausgeschlossen werden, beispielsweise über die Ausgestaltung der Mahlkammer. Kontaminationen sind insbesondere im Falle von Nassmahlverfahren in Folge des Einsatzes von Mahlkörpern und des damit verbundenen Abriebs eine Herausforderung. Einem etwaigen Auftreten von Wasserdampf-Kondensaten kann auf einfache Weise entgegengewirkt werden.

Die erfindungsgemäß hergestellten Silizium-Partikel können vorteilhafterweise direkt als Ausgangsstoff für ein Anodenaktivmaterial von Lithium-Ionenbatterien eingesetzt werden, ohne dass ein weiterer Verfahrensschritt zur Bearbeitung der Silizium-Mahlprodukte erforderlich ist.

Die Erfindung wird anhand von den folgenden Beispielen erläutert:

**Beispiel 1**

600 g polykristallines Reinstsiliziumpulver aus Solarsilizium (Wacker BGF (sg) Type PCL-NCS-F, $d_{10}$ = 100 $\mu$m, $d_{50}$ = 240 $\mu$m, $d_{90}$ = 440 $\mu$m) wurden in das Vorlagegefäß einer Dampfstrahlmühle s-Jet 25 (Hersteller Netzsch Trockenmahltechnik GmbH) eingefüllt. Die Mühle wurde mit 15 kg/h Wasserdampf bei 190°C und 10 bar Überdruck betrieben. Die Dampfstrahlmühle war zuvor mit 120°C heißem Stickstoff vorgeheizt worden. Die Drehzahl des Sichterrads betrug 13000 U/min. Nach 140 min wurde die Dampfstrahlmühle angehalten und das Auffanggefäß am Partikelfilter geöffnet. Die Partikel wurden anschließend bei Raumtemperatur in Luft unter Umgebungsdruck gelagert.

Das Auffanggefäß enthielt 230 g Siliziumpulver mit $d_{10}$ = 0,37 $\mu$m, $d_{50}$ = 0,83 $\mu$m und $d_{90}$ = 1,9 $\mu$m (bestimmt mit dem Messgerät Horiba LA950).

Die aus der Partikelgrößenverteilung unter der Annahme kugelförmiger Partikel berechnete Oberfläche betrug 4 $m^2$/g.

Der Sauerstoffgehalt (bestimmt mit dem Sauerstoffanalysator Leco TCH 600) betrug 2,1 Gew.% und 5,2 mg/$m^2$, bezogen auf die berechnete Partikeloberfläche.

**Beispiel 2**

Beispiel 2 wurde identisch durchgeführt wie Beispiel 1, mit folgenden Unterschieden:
Die Drehzahl des Sichterrads betrug 4000 U/min, und die Dampfstrahlmühle wurde nach 20 min angehalten.

Das Auffanggefäß enthielt 350 g Siliziumpulver mit $d_{10}$ = 2pm, $d_{50}$ = 4,3 $\mu$m und $d_{90}$ = 7,4 $\mu$m (bestimmt mit dem Messgerät Horiba LA950) .

Die aus der Partikelgrößenverteilung unter der Annahme kugelförmiger Partikel berechnete Oberfläche betrug 0,82 $m^2$/g.

Der Sauerstoffgehalt (bestimmt mit dem Sauerstoffanalysator Leco TCH 600) betrug 0,44 Gew.% und 5,4 mg/$m^2$, bezogen auf die berechnete Partikeloberfläche.

**Vergleichsbeispiel 3**

5 kg polykristallines Reinstsiliziumpulver aus Solarsilizium (Wacker BGF (sg) Type PCL-NCS-F, $d_{10}$ = 100 $\mu$m, $d_{50}$ = 240 $\mu$m, $d_{90}$ = 440pm) wurden in das Vorlagegefäß einer Fließbettstrahlmühle CGS 16 (Hersteller Netzsch Trockenmahltechnik GmbH) eingefüllt. Die Fließbettstrahlmühle wurde mit 93 $m^3$/h Stickstoff bei 20°C und 7 bar Überdruck betrieben. Die Drehzahl des Sichterrads betrug 6000 U/min. Nach 60 min wurde die Fließbettstrahlmühle angehalten und das Auffanggefäß am Partikelfilter geöffnet. Die Partikel wurden anschließend bei Raumtemperatur in Luft unter Umgebungsdruck gelagert.

Das Auffanggefäß enthielt 3,4 kg Siliziumpulver

mit $d_{10}$ = 3,1 μm, $d_{50}$ = 4,8 μm und $d_{90}$ = 7,1 μm (bestimmt mit dem Messgerät Horiba LA950).

Die aus der Partikelgrößenverteilung unter der Annahme kugelförmiger Partikel berechnete Oberfläche betrug 0,57 m²/g.

Der Sauerstoffgehalt (bestimmt mit dem Sauerstoffanalysator Leco TCH 600) betrug 0,27 Gew.% und 4,7 mg/m², bezogen auf die berechnete Partikeloberfläche.

**Patentansprüche**

1. Verfahren zur Herstellung von Silizium-Partikeln durch Mahlen von Silizium enthaltenden Feststoffen in einer Strahlmühle mit einem Mahlfluid, das ≥ 20 Vol.% Wasserdampf enthält, bezogen auf das Gesamtvolumen des Mahlfluids.

2. Verfahren zur Herstellung von Silizium-Partikeln gemäß Anspruch 1, **dadurch gekennzeichnet, dass** das Mahlfluid eine Temperatur von 160 bis 800°C hat.

3. Verfahren zur Herstellung von Silizium-Partikeln gemäß Anspruch 1 oder 2, **dadurch gekennzeichnet, dass** das Mahlfluid einen Druck von 5 bis 220 bar aufweist.

4. Verfahren zur Herstellung von Silizium-Partikeln gemäß Anspruch 1 bis 3, **dadurch gekennzeichnet, dass** das Mahlfluid zu ≥ 50 Vol.% Wasserdampf enthält, bezogen auf das Gesamtvolumen des Mahlfluids.

5. Verfahren zur Herstellung von Silizium-Partikeln gemäß Anspruch 1 bis 4, **dadurch gekennzeichnet, dass** das Mahlfluid zu ≤ 50 Vol.% Stickstoff, Edelgase und sonstige Inertgase enthält, bezogen auf das Gesamtvolumen des Mahlfluids.

6. Verfahren zur Herstellung von Silizium-Partikeln gemäß Anspruch 1 bis 5, **dadurch gekennzeichnet, dass** das in die Mahlkammer eingebrachte Mahlfluid eine Schallgeschwindigkeit von > 343 m/s aufweist.

7. Verfahren zur Herstellung von Silizium-Partikeln gemäß Anspruch 1 bis 6, **dadurch gekennzeichnet, dass** die Temperatur des Wasserdampfes um ≥ 2°C über dem Taupunkt des Wassers liegt.

8. Verfahren zur Herstellung von Silizium-Partikeln gemäß Anspruch 1 bis 7, **dadurch gekennzeichnet, dass** das Mahlfluid überhitzten Wasserdampf enthält.

9. Verfahren zur Herstellung von Silizium-Partikeln gemäß Anspruch 8, **dadurch gekennzeichnet, dass** der überhitzte Wasserdampf erhältlich ist durch Erhitzen von Wasser zum Siedepunkt, anschließende Zufuhr der Verdampfungswärme unter Bildung von Sattdampf und schließlich Zufuhr weiterer Wärme.

10. Verfahren zur Herstellung von Silizium-Partikeln gemäß Anspruch 8 bis 9, **dadurch gekennzeichnet, dass** bei gegebenem Druck die Temperatur des in die Strahlmühle einströmenden Mahlfluids größer ist als die Temperatur, die der Sattdampfkurve von Wasser bei diesem Druck entspricht, wobei die Sattdampfkurve im Phasendiagramm von Wasser die Trennlinie von Nassdampf zu überhitztem Wasserdampf ist.

11. Verfahren zur Herstellung von Silizium-Partikeln gemäß Anspruch 1 bis 10, **dadurch gekennzeichnet, dass** der Median der volumengewichteten Durchmessergrößenverteilung $d_{50}$ der so erhaltenen Silizium-Partikel im Bereich von 0,3 μm bis 100 μm, insbesondere 0,5 μm bis 10 μm liegt.

12. Verfahren zur Herstellung von Silizium-Partikeln gemäß Anspruch 1 bis 11, **dadurch gekennzeichnet, dass** die so erhaltenen Silizium-Partikel einen Sauerstoffgehalt von ≤ 10 mg haben, bezogen auf 1 m² Oberfläche der Silizium-Partikel.

**Claims**

1. Process for producing silicon particles by milling silicon-containing solids in a jet mill using a milling fluid which contains ≥ 20% by volume of steam, based on the total volume of the milling fluid.

2. Process for producing silicon particles according to Claim 1, **characterized in that** the milling fluid has a temperature of from 160 to 800°C.

3. Process for producing silicon particles according to Claim 1 or 2, **characterized in that** the milling fluid has a pressure of from 5 to 220 bar.

4. Process for producing silicon particles according to any of Claims 1 to 3, **characterized in that** the milling fluid contains ≥ 50% by volume of steam, based on the total volume of the milling fluid.

5. Process for producing silicon particles according to any of Claims 1 to 4, **characterized in that** the milling fluid contains ≤ 50% by volume of nitrogen, noble gases and other inert gases, based on the total volume of the milling fluid.

6. Process for producing silicon particles according to any of Claims 1 to 5, **characterized in that** the milling fluid introduced into the milling chamber has a speed of sound of > 343 m/s.

7. Process for producing silicon particles according to any of Claims 1 to 6, **characterized in that** the temperature of the steam is $\geq$ 2°C above the dew point of the water.

8. Process for producing silicon particles according to any of Claims 1 to 7, **characterized in that** the milling fluid contains superheated steam.

9. Process for producing silicon particles according to Claim 8, **characterized in that** the superheated steam is obtainable by heating water to the boiling point, subsequently introducing the heat of vaporization to form saturated steam and finally introducing further heat.

10. Process for producing silicon particles according to Claim 8 or 9, **characterized in that**, at a given pressure, the temperature of the milling fluid flowing into the jet mill is greater than the temperature which corresponds to the saturated steam curve of water at this pressure, where the saturated steam curve in the phase diagram of water is the dividing line between wet steam and superheated steam.

11. Process for producing silicon particles according to any of Claims 1 to 10, **characterized in that** the median of the volume-weighted diameter size distribution $d_{50}$ of the silicon particles obtained in this way is in the range from 0.3 $\mu$m to 100 $\mu$m, in particular from 0.5 $\mu$m to 10 $\mu$m.

12. Process for producing silicon particles according to any of Claims 1 to 11, **characterized in that** the silicon particles obtained in this way have an oxygen content of $\leq$ 10 mg, based on 1 m$^2$ of surface area of the silicon particles.

**Revendications**

1. Procédé de fabrication de particules de silicium par broyage de solides contenant du silicium dans un broyeur à jet avec un fluide de broyage, qui contient $\geq$ 20 % en volume de vapeur d'eau, par rapport au volume total du fluide de broyage.

2. Procédé de fabrication de particules de silicium selon la revendication 1, **caractérisé en ce que** le fluide de broyage a une température de 160 à 800 °C.

3. Procédé de fabrication de particules de silicium selon la revendication 1 ou 2, **caractérisé en ce que** le fluide de broyage présente une pression de 5 à 220 bar.

4. Procédé de fabrication de particules de silicium selon les revendications 1 à 3, **caractérisé en ce que** le fluide de broyage contient $\geq$ 50 % en volume de vapeur d'eau, par rapport au volume total du fluide de broyage.

5. Procédé de fabrication de particules de silicium selon les revendications 1 à 4, **caractérisé en ce que** le fluide de broyage contient $\leq$ 50 % en volume d'azote, de gaz nobles et d'autres gaz inertes, par rapport au volume total du fluide de broyage.

6. Procédé de fabrication de particules de silicium selon les revendications 1 à 5, **caractérisé en ce que** le fluide de broyage introduit dans la chambre de broyage présente une vitesse du son > 343 m/s.

7. Procédé de fabrication de particules de silicium selon les revendications 1 à 6, **caractérisé en ce que** la température de la vapeur d'eau est $\geq$ 2 °C au-dessus du point de rosée de l'eau.

8. Procédé de fabrication de particules de silicium selon les revendications 1 à 7, **caractérisé en ce que** le fluide de broyage contient de la vapeur d'eau surchauffée.

9. Procédé de fabrication de particules de silicium selon la revendication 8, **caractérisé en ce que** la vapeur d'eau surchauffée peut être obtenue par chauffage d'eau au point d'ébullition, puis introduction de la chaleur d'évaporation avec formation de vapeur saturée, et enfin introduction de chaleur supplémentaire.

10. Procédé de fabrication de particules de silicium selon les revendications 8 à 9, **caractérisé en ce qu'**à une pression donnée, la température du fluide de broyage entrant dans le broyeur à jet est supérieure à la température qui correspond à la courbe de vapeur saturée de l'eau à cette pression, la courbe de vapeur saturée étant sur le diagramme de phases de l'eau la ligne de séparation entre la vapeur humide et la vapeur d'eau surchauffée.

11. Procédé de fabrication de particules de silicium selon les revendications 1 à 10, **caractérisé en ce que** la médiane de la distribution de tailles du diamètre moyennée en volume $d_{50}$ des particules de silicium ainsi obtenues se situe dans la plage allant de 0,3 $\mu$m à 100 $\mu$m, notamment de 0,5 $\mu$m à 10 $\mu$m.

12. Procédé de fabrication de particules de silicium selon les revendications 1 à 11, **caractérisé en ce que** les particules de silicium ainsi obtenues présentent une teneur en oxygène $\leq$ 10 mg, par rapport à 1 m$^2$ de surface des particules de silicium.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1754539 A
- EP 3027690 A
- DE 19824062
- US 7866582 B